# EUROPEAN PATENT APPLICATION

(11) **EP 4 503 583 A1**
(43) Date of publication of application: **05.02.2025**
(21) Application number: 23922411.6
(22) Date of filing: 21.11.2023
(51) Int. Cl.: H04M 1/72454

(54) **WAKE-UP METHOD AND ELECTRONIC DEVICE**

(30) Priority: 17.02.2023 CN 202310152434
(71) Applicant: Honor Device Co., Ltd., Shenzhen, Guangdong 518040 (CN)
(72) Inventor: ZHOU, Zhenguo, Shenzhen, Guangdong 518040 (CN); CHE, Yufeng, Shenzhen, Guangdong 518040 (CN); LI, Haitao, Shenzhen, Guangdong 518040 (CN); ZHONG, Guanghua, Shenzhen, Guangdong 518040 (CN)
(74) Representative: Beder, Jens
(86) International application number: PCT/CN2023/132934
(87) International publication number: WO 2024/169295

(57) **Abstract**

Embodiments of this application provide a wake-up method and an electronic device, and are applied to the field of terminal technologies. When it is detected that the electronic device enters a deep suspend state, the electronic device can automatically reboot, so that the electronic device restores to normal, and can be normally used by a user, thereby improving user experience. In the method, the electronic device starts timing. Suspend duration is obtained if a working state of the electronic device is a suspend state when timing duration reaches a preset refresh period, where the suspend duration is a difference between a moment at which the electronic device enters the suspend state and a timing refresh moment. The electronic device triggers, if the suspend duration is greater than or equal to a first preset threshold, an operation of rebooting a system.

## Description

This application claims priority to Chinese Patent Application No. 202310152434.2, filed with the China National Intellectual Property Administration on February 17, 2023 and entitled "WAKE-UP METHOD AND ELECTRONIC DEVICE", which is incorporated herein by reference in its entirety.

### TECHNICAL FIELD

This application relates to the field of terminal technologies, and in particular, to a wake-up method and an electronic device.

### BACKGROUND

With rapid development of intelligent technologies, electronic devices have become indispensable tools in users' daily life. To prolong battery lives of the electronic devices and ensure battery life experience of the users, the electronic devices may automatically enter a first suspend state. In this state, some hardware components of the electronic devices no longer work, thereby reducing power consumption. In this case, the users may wake up the electronic devices from the first suspend state through triggering operations.

However, it is found through studies that some electronic devices enter a second suspend state after being in the first suspend state for a long time. In the second suspend state, the triggering operations of the users cannot wake up screens of the electronic devices. Consequently, the electronic devices cannot be used normally, resulting in poor user experience.

### SUMMARY

Based on this, embodiments of this application provide a wake-up method and an electronic device. When it is detected that the electronic device enters a second suspend state, the electronic device can automatically reboot, so that the electronic device restores to normal, and can be normally used by a user, thereby improving user experience.

According to a first aspect, this application provides a wake-up method. The method is applied to an electronic device. In the method, the electronic device starts timing. Suspend duration is obtained if a working state of the electronic device is a suspend state when timing duration reaches a preset refresh period. The suspend duration is a difference between a moment at which the electronic device enters the suspend state and a timing refresh moment, and the timing refresh moment is a moment at which the timing duration reaches the preset refresh period. The electronic device triggers, if the suspend duration is greater than or equal to a first preset threshold, an operation of rebooting a system.

In this solution, the electronic device switches the working state when the electronic device has detected control information. The electronic device sets timing and determines the working state of the electronic device at each timing refresh moment. If the working state is the suspend state, it indicates that the electronic device is still in the suspend state when a timer refreshes. In this case, whether the suspend duration is greater than or equal to the first preset threshold is further determined. If the suspend duration is greater than or equal to the first preset threshold, it indicates that the suspend state is a second suspend state in which the electronic device cannot be woken up. In this case, an operation of controlling the electronic device to reboot hardware is performed to end the second suspend state, so that the electronic device restores to normal. In this solution, because a manner of detecting whether the electronic device enters a state in which the electronic device cannot be woken up is not detecting, by periodically waking up the electronic device by using an RTC timer, whether the electronic device is successfully woken up, but is determining, when the electronic device is in the suspend state, whether the suspend duration is greater than or equal to the first preset threshold, no additional wake-up times are generated, and power consumption is small.

In another possible design manner of the first aspect, the electronic device receives a first control instruction at an interval of first duration when being screen-off or in the suspend state, where the first duration is less than the first preset threshold; and the electronic device switches from the suspend state to an awake state. The electronic device is periodically woken up. The electronic device processes an application process when the electronic device is in the awake state, and enters the suspend state after completing processing. Specifically, the electronic device may have three states: the suspend state, the awake state, and a power-off state. The application process is paused when the electronic device is in the suspend state; and the application process resumes when the electronic device switches from the suspend state to the awake state. The electronic device briefly enters the power-off state when the system of the electronic device reboots, and the application process is disabled in the power-off state.

For example, a process is a wifi process. "Process is paused" means that there are no wifi scanning and data interaction through wifi when a mobile phone is in the suspend state, and information reception/transmission of a social application is paused. "Process resumes" means that a wifi function is enabled when the mobile phone switches from the suspend state to the awake state, and the mobile phone can receive an SMS message

In another possible design manner of the first aspect, the method further includes:
triggering, if the suspend duration is less than the first preset threshold and greater than a second preset threshold, an operation of waking up the electronic device.

In this design manner, when the second preset threshold < the suspend duration < the first preset threshold, the operation of rebooting the system is not directly triggered, but it is attempted to wake up the electronic device. Therefore, a probability that the electronic device triggers system reboot due to a wake-up error occurring when a conventional periodical wake-up solution, such as using a unified heartbeat, is used for waking up the electronic device is reduced. A power consumption problem is inevitably caused when the electronic device reboots the system. Therefore, reducing a false triggering probability can prolong a battery life of the electronic device.

In another possible design manner of the first aspect, a difference between the first preset threshold and the second preset threshold is greater than the preset refresh period.

In this design manner, when the second preset threshold < the suspend duration < the first preset threshold, there are a plurality of opportunities to trigger wake-up of the electronic device. The system reboots only when a plurality of times of wake-up all fail. In this way, the false triggering probability can be further reduced, thereby avoiding the operation that is of rebooting the system and that should not be triggered.

In another possible design manner of the first aspect, the electronic device includes an application processor AP and a low-power module in a sensor hub sensorhub.

That suspend duration is obtained if a working state of the electronic device is a suspend state when timing duration reaches a preset refresh period includes:

The low-power module receives working state information sent by the application processor AP; and when the timing duration reaches the preset refresh period, if the low-power module determines, based on the received working state information, that a working state of the application processor AP is the suspend state, the suspend duration is obtained.

In this design manner, a module that detects whether the electronic device has entered a state in which the electronic device cannot be normally woken up is the low-power module in the sensor hub sensorhub. The low-power module may be enabled when the electronic device is powered on, and continuously listens to the working state information of the electronic device. A module disposed in the sensor hub sensorhub is essentially a sensor-related module, and therefore, an operation of actively waking up the electronic device is not triggered each time the timer expires, thereby reducing power consumption.

In another possible design manner of the first aspect, that the low-power module receives working state information sent by the application processor AP includes:

The application processor AP sends suspend state information to a listener before the application processor AP switches from an awake state to the suspend state, where the suspend state information indicates that the application processor AP enters the suspend state; and the low-power module receives awake state information sent by the listener.

In this design manner, the low-power module has registered the listener, and the listener may listen to the working state of the application processor AP and send the working state to the low-power module. The listener plays a role of data transmission.

In another possible design manner of the first aspect, the low-power module includes an activity recognition AR module.

In another possible design manner of the first aspect, the electronic device includes a power management integrated circuit PMIC. That the electronic device triggers, if the suspend duration is greater than or equal to a first preset threshold, an operation of rebooting a system includes:
sending a second control instruction to the power management integrated circuit PMIC if the suspend duration is greater than or equal to the first preset threshold; and
resetting the power management integrated circuit PMIC in response to the second control instruction, to reboot the system of the electronic device.

According to a second aspect, this application provides a wake-up method. The method is applied to an electronic device. In the method, the electronic device starts timing under a first condition. If the electronic device is woken up when (k-1)-th timing duration reaches a preset refresh period, an operation of waking up the electronic device is triggered when k-th timing duration reaches the preset refresh period. If the electronic device is not woken up, an operation of rebooting a system is triggered when (k+1)-th timing duration reaches the preset refresh period, where k>1 and k is a natural number.

In this solution, when a timer expires for the k-th time, whether the electronic device is woken up when the timer expires last time (that is, when the (k-1)-th timing duration reaches the preset refresh period) is first determined. If the electronic device is woken up, it indicates that the electronic device is in a normal low-power suspend state in a time period from the last time to this time, and has not yet entered a state in which the electronic device cannot be woken up. In this case, the operation of rebooting the system does not need to be triggered this time, but the electronic device is directly woken up. If the electronic device fails to be woken up this time, the operation of rebooting the system is triggered when the timer expires next time (that is, when the (k+1)-th timing duration reaches the preset refresh period), so that the electronic device can restore to normal. That is, wake-up is performed once whenever timing duration of the timer reaches the preset refresh period, so that the electronic device is directly woken up or the electronic device reboots, thereby ensuring that the electronic device is not in a state in which the electronic device cannot be woken up for a long time. Therefore, if the electronic device is in an awake state when a user uses the electronic device, the electronic device may be screen-on in response to a triggering operation of the user for use by the user.

In another possible design manner of the second aspect, the method further includes: if the electronic device is in a suspend state when the (k-1)-th timing duration reaches the preset refresh period, triggering the operation of rebooting the system.

In this design manner, the electronic device is in the suspend state because the electronic device is not woken up when the timer expires last time. Therefore, the operation of rebooting the system needs to be triggered when the timer expires this time. Otherwise, the electronic device is in the state in which the electronic device cannot be woken up for a long time. Consequently, the electronic device cannot be used by the user normally.

In another possible design manner of the second aspect, the electronic device includes a real-time clock RTC timer, an application processor AP, and a watchdog feeding module. That the electronic device is woken up when (k-1)-th timing duration reaches a preset refresh period includes:

When the (k-1)-th timing duration of the real-time clock RTC timer reaches the preset refresh period, the real-time clock RTC timer wakes up the application processor AP, so that the application processor AP sends a read/write instruction to the watchdog feeding module; and the watchdog feeding module performs a read/write operation.

In this design manner, the electronic device is periodically woken up by the RTC timer. The RTC timer sends a timing interrupt when expiring. When the electronic device is normal, the application processor AP is woken up in response to the timing interrupt. "The application processor AP is woken up" means that the electronic device is woken up.

In another possible design manner of the second aspect, that the electronic device is not woken up includes:

A difference between a moment at which the watchdog feeding module performs the read/write operation and a timing refresh moment is greater than or equal to a first preset threshold, and the timing refresh moment is a moment at which the timing duration reaches the preset refresh period.

For example, the timer refreshes at an interval of 4s. Then, an interval between adjacent timing refresh moments is also 4s. Normally, the watchdog feeding module performs the read/write operation after the timer refreshes and the application processor AP is woken up, and an interval between read/write operation moments is also 4s. Therefore, normally, the difference between the moment at which the watchdog feeding module performs the read/write operation and the timing refresh moment is 4s. Once wake-up fails, the difference between the moment at which the watchdog feeding module performs the read/write operation and the timing refresh moment is greater than or equal to 4s. Therefore, the first preset threshold greater than or equal to 4s is set. When the threshold is reached, it is considered that feeding of the watchdog feeding module fails, that is, no read/write operation is performed.

In another possible design manner of the second aspect, the first condition includes: The electronic device is in a low-power suspend state. The low-power suspend state includes a screen-off state, a preset night state, or the like. The electronic device is started when entering the low-power suspend state and is shut down when exiting the low-power suspend state.

According to a third aspect, this application provides an electronic device. The electronic device includes a processor and a memory configured to store instructions executable by the processor. When the processor is configured to execute the instructions, the electronic device is enabled to implement the method according to the first aspect and any possible design manner thereof.

According to a fourth aspect, this application provides a computer-readable storage medium. The computer-readable storage medium includes computer instructions. When the computer instructions are run on an electronic device, the electronic device is enabled to perform the method according to the first aspect and any possible design manner thereof.

According to a fifth aspect, this application provides a computer program product. When the computer program product runs on a computer, the computer is enabled to perform the method according to the first aspect and any possible design manner thereof.

It can be understood that, for beneficial effects that can be achieved by the method provided in the second aspect, the electronic device described in the third aspect, the computer-readable storage medium described in the fourth aspect, and the computer program product described in the fifth aspect, reference may be made to the beneficial effects in the first aspect and any possible design manner thereof. Details are not described herein again.

### BRIEF DESCRIPTION OF DRAWINGS

FIG. 1 is a schematic diagram of a process of switching a working state in a first suspend state in a related technology;
FIG. 2 is a schematic diagram of a process of switching a working state in a second suspend state in a related technology;
FIG. 3 is a schematic diagram of a process of switching a working state according to an embodiment of this application;
FIG. 4 is a schematic diagram of a hardware structure of an electronic device according to an embodiment of this application;
FIG. 5 is a schematic diagram of a principle of a hardware structure of a sensor hub according to an embodiment of this application;
FIG. 6 is a schematic diagram of a software structure of an electronic device according to an embodiment of this application;
FIG. 7 is a sequence diagram of a wake-up method according to an embodiment of this application;
FIG. 8 is a schematic diagram of a start and end process of a timer according to an embodiment of this application;
FIG. 9 is a schematic diagram of obtaining time information by an RTC according to an embodiment of this application;
FIG. 10 is a schematic diagram of an interrupt signal according to an embodiment of this application;
FIG. 11 is a flowchart of a process of recording a watchdog feeding moment according to an embodiment of this application;
FIG. 12 is a flowchart of a wake-up method according to an embodiment of this application;
FIG. 13 is a flowchart of another wake-up method according to an embodiment of this application;
FIG. 14 is a sequence diagram of another wake-up method according to an embodiment of this application;
FIG. 15 is a schematic diagram in which an awake state is received before a timing refresh moment according to an embodiment of this application;
FIG. 16 is a schematic diagram in which a suspend state is received before a timing refresh moment according to an embodiment of this application;
FIG. 17 is a flowchart of a wake-up procedure of an AR module after a second preset threshold is set according to an embodiment of this application; and
FIG. 18 is a flowchart of a data maintenance and test solution according to an embodiment of this application.

### DESCRIPTION OF EMBODIMENTS

In the following descriptions, the terms "first" and "second" are used only for the purpose of description, and shall not be construed as indicating or implying relative importance or implicitly indicating a quantity of indicated technical features. Therefore, a feature defined with "first" or "second" may explicitly or implicitly include one or more such features. In the descriptions of the embodiments, unless otherwise stated, "a plurality of" means two or more.

A first suspend state (or referred to as a low-power suspend state) means that in a time period in which an electronic device waits to work (or referred to as not yet working), power consumption is reduced in manners such as disabling some sensor devices and reducing a working frequency of a central processing unit (central processing unit, CPU), to achieve a power saving effect.

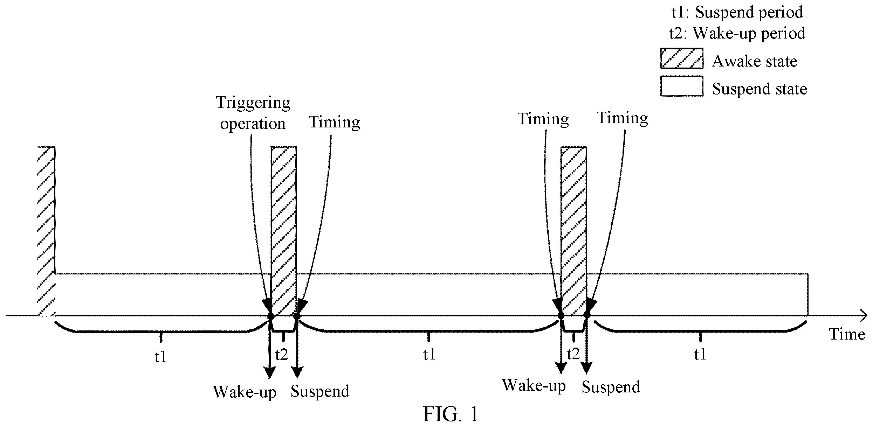

As shown in FIG. 1, the CPU of the electronic device is still working in the first suspend state. Therefore, the electronic device may be woken up from a suspend state in response to that a triggering operation is detected. For example, the triggering operation may be a call input, inserting an external device, triggering a power key, real-time clock (real-time clock, RTC) automatic wake-up, fingerprint unlocking, human face unlocking, or the like.

Still refer to FIG. 1. In addition to wake-up triggering, the electronic device may be periodically woken up in the first suspend state. For example, if no triggering operation is detected when the electronic device is screen-off or in the suspend state, the electronic device is controlled to switch from the suspend state to an awake state at an interval of a suspend period t1. If no triggering operation is detected when the electronic device is in the awake state, the electronic device is controlled to switch from the awake state to the suspend state at an interval of a wake-up period t2.

The wake-up period t2 is a difference between a wake-up moment and a moment at which an application process in the electronic device releases a last wake-up lock. Wake-up periods t2 are not necessarily equal. If a time for releasing the wake-up lock is long, the wake-up period t2 is long, and vice versa. The suspend period t1 is long, and the wake-up period t2 is short, thereby reducing power consumption.

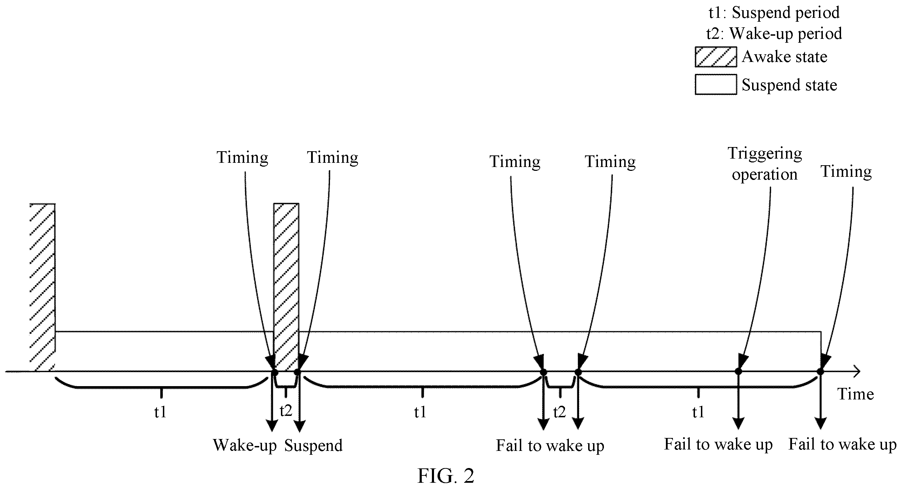

It is found through studies that electronic devices using some chips have a probability of malfunctioning when being in the first suspend state for a long time. As shown in FIG. 2, a specific manifestation is that the electronic devices cannot be woken up in response to triggering operations and cannot be automatically woken up, which affects normal use of the electronic devices.

In this application, such a malfunction means that the electronic device enters a second suspend state (or referred to as a deep suspend state). It should be understood that both the first suspend state and the second suspend state are forms of the suspend state and have a parallel relationship. Malfunction positioning information cannot be captured and a related signal cannot be measured in the second suspend state. In addition, a probability of occurrence of a malfunction is small. After maintenance and test are performed for the foregoing problems, it is still difficult to pinpoint a malfunction cause. Therefore, a malfunction that occurs on the electronic device cannot be pertinently resolved temporarily, and can only be avoided. For example, an avoidance solution may be that it is detected, in a timely manner, that the electronic device enters the second suspend state in which the electronic device cannot be woken up, and the electronic device reboots to end the second suspend state, so that the electronic device restores to normal. In the avoidance solution, how to quickly detect that the electronic device enters the second suspend state in which the electronic device cannot be woken up is a problem currently to be resolved urgently.

In view of this, an embodiment of this application provides a wake-up method. The method is applied to an electronic device. The electronic device starts timing. Suspend duration is obtained if a working state of the electronic device is a suspend state when timing duration reaches a preset refresh period, where the suspend duration is a difference between a suspend moment at which the electronic device enters the suspend state and a timing refresh moment, and the timing refresh moment is a moment at which the timing duration reaches the preset refresh period. The electronic device triggers, if the suspend duration is greater than or equal to a first preset threshold (or referred to as a deep suspend threshold), an operation of rebooting a system. In this embodiment of this application, the electronic device switches the working state when the electronic device has detected control information. The electronic device sets timing and determines the working state of the electronic device at each timing refresh moment. If the working state is the suspend state, it indicates that the electronic device is still in the suspend state when a timer refreshes. In this case, whether the suspend duration is greater than or equal to the first preset threshold is further determined. If the suspend duration is greater than or equal to the first preset threshold, it indicates that the suspend state is a second suspend state in which the electronic device cannot be woken up. In this case, an operation of controlling the electronic device to reboot hardware is performed to end the second suspend state, so that the electronic device restores to normal.

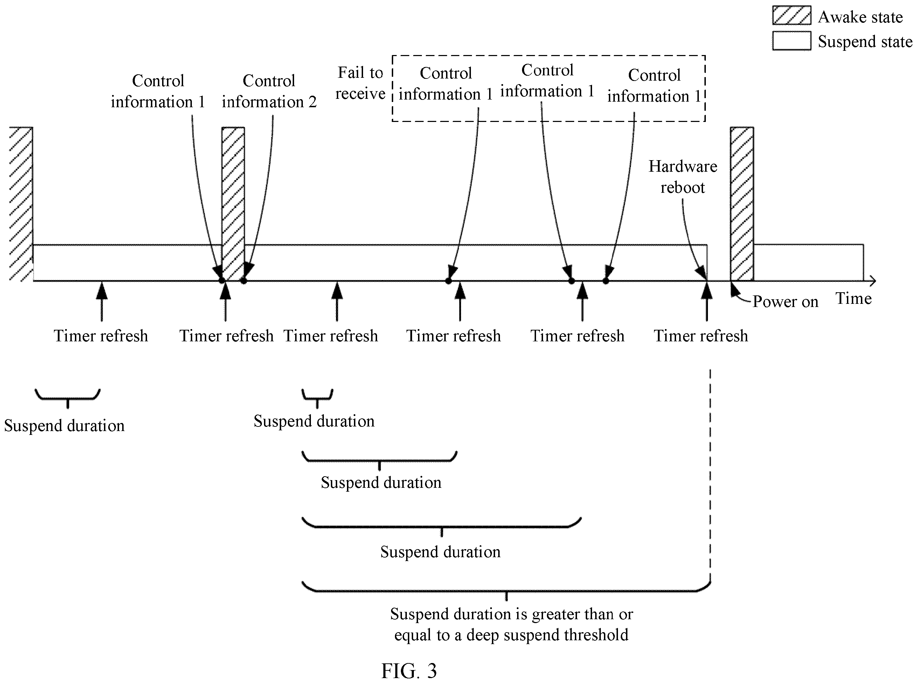

As shown in FIG. 3, in the suspend state, the electronic device may switch to an awake state in response to that control information 1 is detected; and in the awake state, the electronic device has detected control information 2 and may switch to the suspend state. The electronic device enters the second suspend state after the suspend state, that is, the electronic device fails to receive the control information 1 and cannot be woken up. For this problem, the electronic device starts timing, and the timer refreshes once whenever the timing duration reaches the preset refresh period, and determines the working state of the electronic device. In FIG. 3, the electronic device does not obtain the suspend duration when the timer refreshes in the awake state; and the electronic device obtains the suspend duration when the timer refreshes in the suspend state. When the suspend duration is greater than or equal to a first preset threshold, it may be determined that the electronic device enters the second suspend state, and the electronic device is controlled to reboot the hardware. One wake-up period t2 after a moment at which the hardware reboots, the electronic device is controlled to switch from the awake state to the suspend state. Because the electronic device is no longer in the second suspend state after rebooting, the electronic device may be woken up in response to a triggering operation. When the triggering operation is detected in the suspend state, the electronic device is woken up from the suspend state.

In this embodiment of this application, the electronic device may be a device such as a portable computer (for example, a mobile phone), a tablet computer, a notebook computer, a personal computer (personal computer, PC), a wearable electronic device (for example, a smartwatch), an augmented reality (augmented reality, AR)\virtual reality (virtual reality, VR) device, or a vehicle-mounted computer. A specific form of the electronic device is not specially limited in the following embodiments.

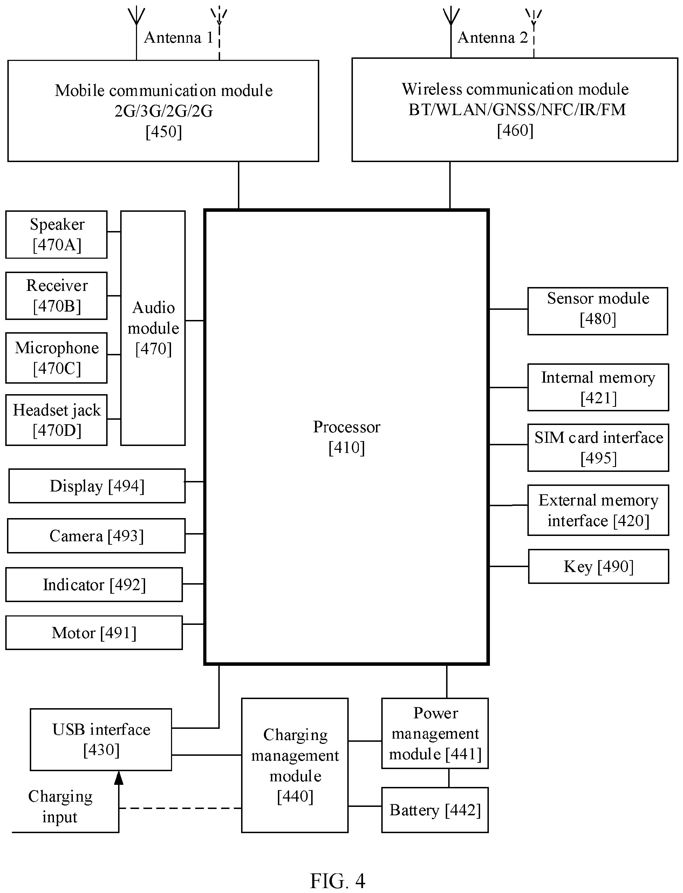

As shown in FIG. 4, an example in which the electronic device is a mobile phone is used. The mobile phone may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a key 490, a motor 491, an indicator 492, a camera 493, a display 494, a subscriber identification module (subscriber identification module, SIM) card interface 495, and the like.

The sensor module 480 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It can be understood that the structure illustrated in this embodiment does not constitute a specific limitation on the mobile phone. In some other embodiments, the mobile phone may include more or fewer components than those shown in the figure, or some components may be combined, or some components may be split, or components are arranged in different manners. The components shown in the figure may be implemented by hardware, software, or a combination of software and hardware.

The processor 410 may include one or more processing units. For example, the processor 410 may include an application processor (application processor, AP), a sensor hub (sensorhub), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on instruction operation code and a timing signal, to complete control of instruction fetching and instruction execution.

A memory may be further disposed in the processor 410, and is configured to store instructions and data. In some embodiments, the memory in the processor 410 is a cache. The memory may store instructions or data just used or cyclically used by the processor 410. If the processor 410 needs to use the instructions or the data again, the processor may directly invoke the instructions or the data from the memory. This avoids repeated access and reduces a wait time of the processor 410, thereby improving efficiency of a system.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI) interface, a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules shown in this embodiment is merely an example for description, and does not constitute a limitation on the structure of the electronic device. In some other embodiments, the electronic device may alternatively use an interface connection manner different from that in the foregoing embodiment, or use a combination of a plurality of interface connection manners.

The electronic device implements a display function by using the GPU, the display 494, the application processor, and the like. The GPU is a microprocessor for image processing, and is connected to the display 494 and the application processor. The GPU is configured to perform mathematical and geometric calculation for graphics rendering. The processor 410 may include one or more GPUs. The one or more GPUs execute program instructions to generate or change displayed information.

The external memory interface 420 may be configured to connect to an external memory card, for example, a Micro SD card, to expand a storage capability of the electronic device. The external memory card communicates with the processor 410 through the external memory interface 420, to implement a data storage function. For example, files such as music and videos are stored in the external memory card.

The internal memory 421 may be configured to store computer-executable program code. The executable program code includes instructions. The internal memory 421 may include a program storage area and a data storage area. The program storage area may store an operating system, an application required by at least one function (for example, controlling the electronic device to switch the working state), and the like. The data storage area may store data (for example, working state information and switching time information) and the like created in a use process of the electronic device. In addition, the internal memory 421 may include a high-speed random access memory, and may further include a non-volatile memory, for example, at least one magnetic disk storage device, a flash memory device, or a universal flash storage (universal flash storage, UFS). The processor 410 executes various function applications and data processing of the electronic device by running the instructions stored in the internal memory 421 and/or the instructions stored in the memory disposed in the processor.

The display 494 is configured to display an image, a video, and the like. The display may be a touchscreen.

The touchscreen may include the display 494 and a touch sensor. The touch sensor detects a touch operation performed on or near the touch sensor, and the touchscreen sends touch data to the AP.

The display 494 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like.

The electronic device may implement a shooting function by using the ISP, the camera 493, the video codec, the GPU, the display 494, the application processor, and the like.

The ISP is configured to process data fed back by the camera 493. For example, during shooting, a shutter is pressed, light is transferred to a photosensitive element of the camera through a lens, an optical signal is converted into an electrical signal, and the photosensitive element of the camera transfers the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a shooting scene. In some embodiments, the ISP may be disposed in the camera 493.

The camera 493 is configured to capture a still image or a video. An optical image is generated for an object by using the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include N cameras 493, where N is a positive integer greater than 1.

The digital signal processor is configured to process a digital signal, and may further process another digital signal in addition to the digital image signal. For example, when the electronic device performs frequency selection, the digital signal processor is configured to perform Fourier transform or the like on frequency energy.

The video codec is configured to compress or decompress a digital video. The electronic device may support one or more video codecs. In this way, the electronic device can play or record videos in a plurality of encoding formats, for example, moving picture experts group (moving picture experts group, MPEG) 1, MPEG2, MPEG3, and MPEG4.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device, for example, image recognition, facial recognition, speech recognition, and text understanding, may be implemented by using the NPU.

Methods in the following embodiments may all be implemented in an electronic device having the foregoing hardware structure.

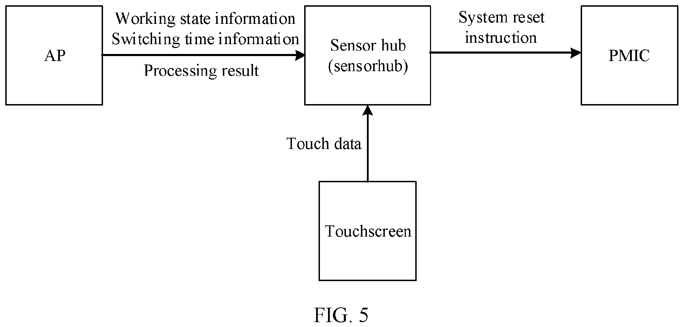

As shown in FIG. 5, in this embodiment of this application, the AP is electrically connected to the sensor hub by using an advanced peripheral bus (advanced peripheral bus, APB). The sensor hub may process the touch data of the touchscreen when the AP enters the suspend state, and send a processing result to the AP. If the AP determines, based on the processing result, that there is a triggering operation, the AP switches to the awake state.

Still refer to FIG. 5. In some embodiments, the AP sends the working state information and the switching time information to the sensor hub before entering the suspend state and after being woken up. Then, when the sensor hub determines, based on the received working state information and switching time information, that the working state information sent by the AP last time indicates that the AP has entered the suspend state, and that the suspend duration is greater than or equal to the first preset threshold, a module preset at a kernel layer may be triggered, to send a second control instruction (or referred to as a wake-up instruction) to a power management integrated circuit (power management integrated circuit, PMIC). In response to the second control instruction, the PMIC enables the entire system, including the AP, to reboot after disconnection.

In some embodiments, when the electronic device starts timing, and when a first condition is met, a timing start moment is refreshed once whenever the timing duration reaches the preset refresh period. The first condition includes at least one of no triggering operation being detected, a current time point being in a preset time period, and the electronic device being in a screen-off state.

In some embodiments, the electronic device has detected the triggering operation, the timing start moment is refreshed, and the electronic device is controlled by the processor 410 to switch from the suspend state to the awake state.

A software system of the electronic device may use a layered architecture, an event-driven architecture, a microkernel architecture, a microservice architecture, or a cloud architecture. In the embodiments of this application, an Android^{™} system with a layered architecture is used as an example to describe a software structure of the electronic device.

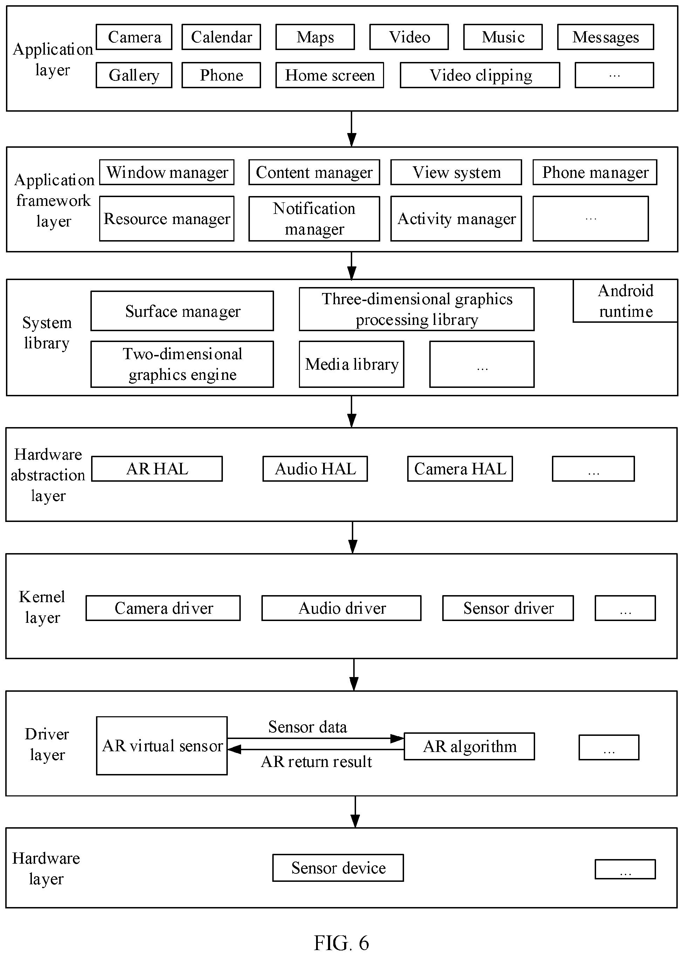

As shown in FIG. 6, the layered architecture divides software into several layers, and each layer has a clear role and task. The layers communicate with each other through a software interface. In some embodiments, the Android^{™} system is divided into six layers from top to bottom: an application layer, an application framework layer (framework layer for short), Android runtime (Android^{™} runtime) and a system library, a hardware abstraction layer (hardware abstraction layer, HAL), a kernel layer, and a driver layer. Further, there is a hardware layer below the driver layer.

Application packages may include applications such as Camera, Calendar, Maps, Video, Music, Messages, Gallery, Phone, Home, and Video clipping.

The framework layer provides an application programming interface (application programming interface, API) and a programming framework for the applications at the application layer. The framework layer includes some predefined functions. The framework layer may include a window manager, a content manager, a view system, a phone manager, a resource manager, a notification manager, an activity manager, and the like.

The view system includes a visual control, for example, a control for displaying a text and a control for displaying a picture. The view system may be configured to build an application. A display interface may include one or more views. For example, a display interface including an SMS message notification icon may include a view for displaying a text and a view for displaying a picture.

The resource manager provides various resources for an application, for example, a localized string, an icon, a picture, a layout file, and a video file.

The window manager is configured to manage a window program. The window manager may obtain a size of a display, determine whether a status bar exists, lock a screen, take a screenshot, and the like.

The activity manager is configured to manage a lifecycle of each application and a navigation rollback function, and is responsible for creating a main thread of Android^{™}, and maintaining the lifecycle of each application.

The HAL layer is encapsulation of a Linux kernel driver, provides an interface for an upper layer, and shields an implementation detail of lower-layer hardware.

The HAL layer may include an activity recognition module AR HAL, an audio (audio) HAL, a camera HAL, and the like.

The kernel layer is a layer between hardware and software. The kernel layer includes at least a display driver, a camera driver, an audio driver, a sensor driver, and the like. The camera driver is a driver layer of a camera and is mainly responsible for interaction with the hardware. For example, the camera driver may enable the camera at the hardware layer, and the enabled camera may collect image data.

The driver layer includes an activity recognition module AR virtual sensor (AR virtual sensor) and an AR algorithm (AR algo), where the AR virtual sensor sends sensor data to the AR algo, and the AR algo returns an AR result to the AR virtual sensor.

The hardware layer includes a sensor device.

The following describes the methods provided in the embodiments of this application with reference to the accompanying drawings.

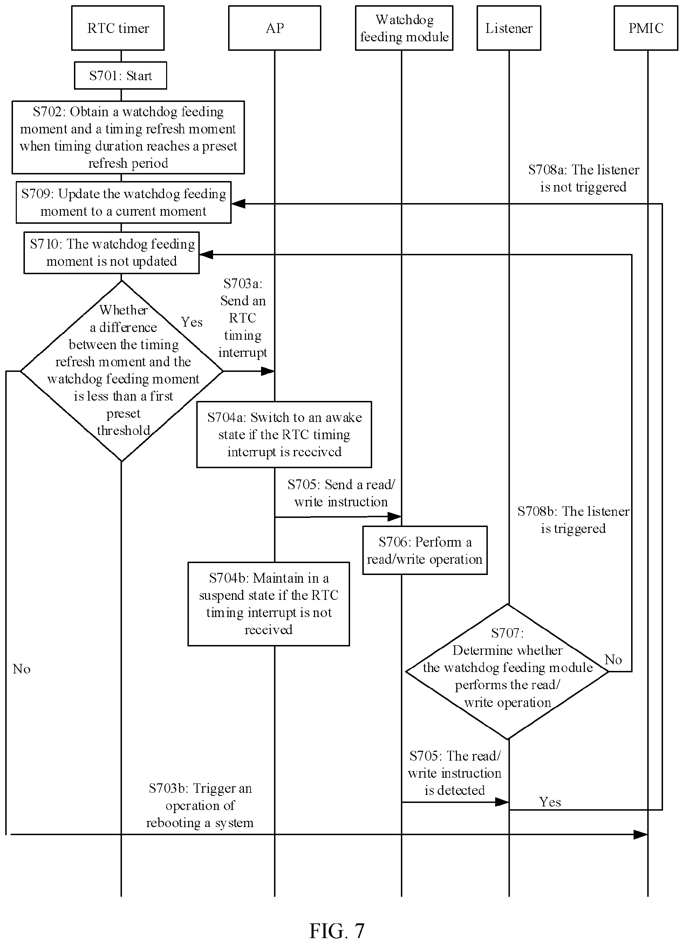

An embodiment of this application provides a wake-up method. The method is applied to an electronic device. The electronic device includes an RTC timer and a watchdog (watchdog) feeding module. For example, the electronic device is a mobile phone. As shown in FIG. 7, the method includes the following steps.

S701: Start the RTC timer.

The RTC timer is a clock installed in the mobile phone and provided with an independent power supply. Even if the mobile phone is powered off, the RTC timer can be powered by the independent power supply and record a time in real time. Therefore, time recording implemented by using the RTC timer is more accurate.

In addition, the RTC timer may generate an interrupt signal (or referred to as an RTC timing interrupt) each time timing expires. The signal may be used to wake up an AP. For details, refer to the following description. Therefore, the RTC timer is used for timing in this step.

The RTC timer is started when the mobile phone switches to a low-power suspend mode (or referred to as a suspend mode).

In some embodiments, the mobile phone switches to the low-power suspend mode when the mobile phone is screen-off. The mobile phone is periodically woken up when being in the low-power suspend mode. The mobile phone may enter a second suspend state once the mobile phone is not woken up for a long time. Therefore, the RTC timer is started when the mobile phone is screen-off. Therefore, the following steps are used to detect whether the mobile phone enters the second suspend state when the mobile phone is screen-off.

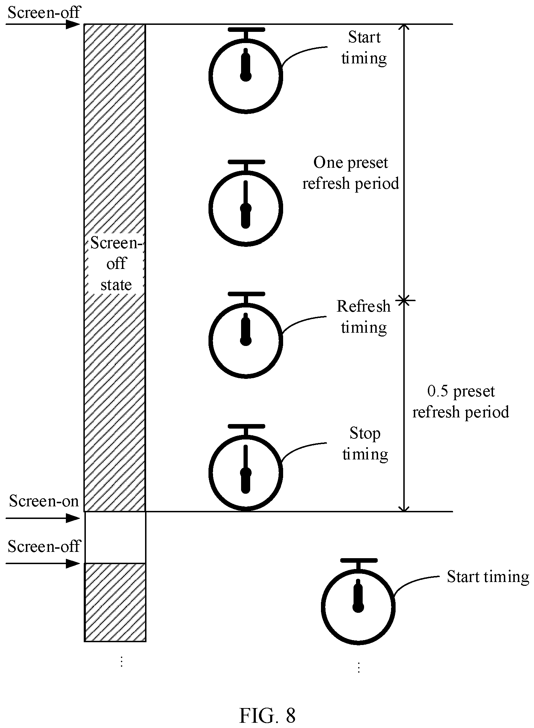

As shown in FIG. 8, the timer is started when the mobile phone is screen-off. After 1.5 preset refresh periods, because the mobile phone is usually woken up with a screen being lit up (or referred to as screen-on) after the mobile phone has received a triggering operation, the RTC timer stops timing when the screen of the mobile phone is lit up, and the timer is started again after the mobile phone is screen-off.

In some other embodiments, the mobile phone switches to the low-power suspend mode when the mobile phone is in a night mode. The night mode refers to a mode indicating that the mobile phone enters a first suspend state in a preset night period in which the mobile phone is not in use for a long time. For example, the night mode is 2: 00- 7: 00 of each day. In this time period, a user does not use the mobile phone for a long time, and therefore, the mobile phone switches to the night mode at 2:00. The mobile phone is periodically woken up when being in the night mode. The mobile phone may enter the second suspend state once the mobile phone is not woken up for a long time. Therefore, the RTC timer is started when the mobile phone is in the night mode. Because the mobile phone exits the night mode at 7:00, the RTC timer stops timing at 7:00 at which the mobile phone exits the night mode.

In this way, the RTC timer in the mobile phone can be started automatically when the mobile phone enters the low-power suspend mode. In a case in which detection accuracy is ensured, because whether the mobile phone has entered the second suspend state is detected in this solution only after the mobile phone enters the first suspend state, power consumption is lower than that when the RTC is always started, thereby saving power.

In addition, in a possible design manner, the RTC timer may be started when the mobile phone is powered on, or the RTC timer may be started after the mobile phone has detected a triggering operation performed by the user for a triggering region of the RTC timer. Details are not described in this application.

S702: The RTC timer obtains a watchdog (watchdog) feeding moment and a timing refresh moment when timing duration reaches a preset refresh period.

A watchdog (watchdog) feeding module is built in the mobile phone, and the watchdog (watchdog) feeding module performs a read/write operation when the AP is woken up. The RTC timer may obtain the watchdog feeding moment of the watchdog feeding module. In a first preset refresh period after the timer starts timing, the watchdog feeding module does not perform read/write, and therefore, the watchdog feeding moment may be recorded as a start moment of the RTC timer. Starting from a second preset refresh period after the timer starts timing, the watchdog feeding moment is recorded as a moment at which the watchdog feeding module performs the read/write operation.

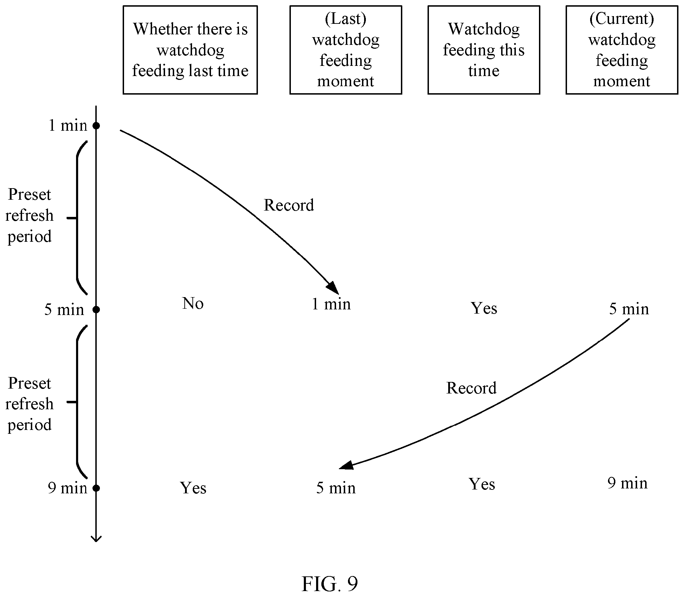

Specifically, for example, the preset refresh period is 4 minutes (min). As shown in FIG. 9, the timer is started at 1 min, and the first preset refresh period ends after 4 min. In this case, the timing refresh moment is 5 min, and the timer has not obtained the watchdog feeding moment. Therefore, the watchdog feeding moment is recorded as 1 min.

The second preset refresh period ends after next 4 min. In this case, the timing refresh moment is 9 min, and the timer obtains the watchdog feeding moment. It is assumed that, in this embodiment, the watchdog feeding module has performed the read/write operation at 5 min, and then the watchdog feeding moment is recorded as 5 min.

The read/write operation may be a refresh operation for timing data of the watchdog feeding module. For example, the preset refresh period is 5s. Normally, the watchdog feeding module has received the read/write operation after timing from 0s to 4s, and timing is started again from 0s. Therefore, a timing time is not greater than 4s. Once the AP is not woken up, it means that watchdog feeding fails, that is, the AP has not sent the read/write operation to the watchdog feeding module, and the watchdog feeding module performs timing for 5s, 6s, or the like after timing for 4s. Therefore, a listener may be disposed to listen to whether a timing moment of the watchdog feeding module is greater than 4s. If the timing moment > 4s, it means that watchdog feeding fails, that is, the watchdog feeding module has not performed the read/write operation. If the listener is not triggered, it means that watchdog feeding succeeds, that is, the watchdog feeding module has performed the read/write operation.

After S702, the timer determines whether a difference between the timing refresh moment and the watchdog feeding moment is less than a first preset threshold. If the difference between the timing refresh moment and the watchdog feeding moment is less than the first preset threshold, S703a is performed; or if the difference between the timing refresh moment and the watchdog feeding moment is not less than the first preset threshold, S703b is performed.

S703a: The RTC timer sends an RTC timing interrupt to the AP if a difference between the timing refresh moment and the watchdog feeding moment is less than a first preset threshold.

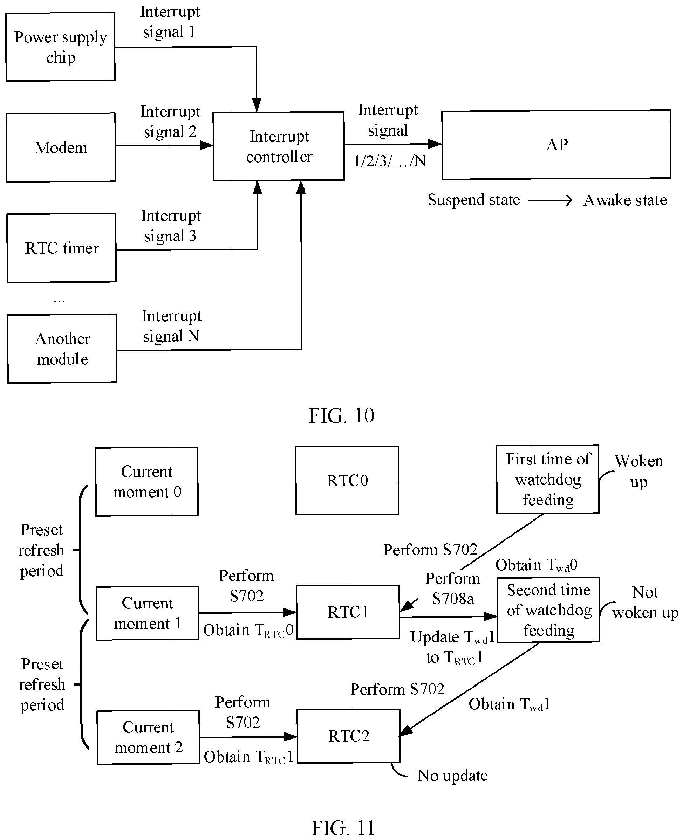

As described above, the mobile phone is woken up after the mobile phone has received the triggering operation in the first suspend state. For example, the triggering operation is triggering of a power key, a call input, or RTC automatic wake-up. As shown in FIG. 10, an interrupt controller is configured in the mobile phone to send an interrupt signal obtained from each module to the AP. If the mobile phone has detected triggering of the power key, a power supply chip sends an interrupt signal 1 to the interrupt controller, and the interrupt controller sends the interrupt signal 1 to the AP. If the mobile phone has detected the call input, a modem sends an interrupt signal 2 to the interrupt controller, and the interrupt controller sends the interrupt signal 2 to the AP. When the mobile phone is screen-off or switches to the night mode, probabilities of occurrence of the foregoing two triggering operations are small. Therefore, the mobile phone easily enters the second suspend state when being screen-off or switching to the night mode. Based on this, in this embodiment, an automatic triggering manner shown in FIG. 10 is used, that is, the RTC timer sends the RTC timing interrupt to the interrupt controller, and the interrupt controller sends the RTC timing interrupt to the AP, to wake up the mobile phone.

In this step, the difference between the timing refresh moment and the watchdog feeding moment is less than the first preset threshold. It indicates that the watchdog feeding module has performed the read/write operation in a time period of the first preset threshold. Because the watchdog feeding module performs the read/write operation after the AP is woken up, that the watchdog feeding module has performed the read/write operation in a time period of the first preset threshold means that the AP is woken up in the time period of the first preset threshold, and it indicates that the mobile phone is in a normal first suspend state instead of the second suspend state. Then, when the mobile phone is in the normal first suspend state, the mobile phone periodically sends the RTC timing interrupt to the AP by using the RTC timer, to wake up the AP.

In a related technology, the mobile phone is periodically woken up when the mobile phone enters the first suspend state. Therefore, normally, the mobile phone does not enter the second suspend state. However, in an actual scenario, there is a case in which the mobile phone is not periodically woken up. Therefore, after S703a, the AP may have two states: an awake state, which corresponds to S704a; and a suspend state, which corresponds to S704b. For details, refer to the following description.

S704a: The AP switches to an awake state if the AP has received the RTC timing interrupt.

In the first suspend state, the AP enters the suspend state to reduce power consumption. After the AP has received the RTC timing interrupt, the AP switches from the suspend state to the awake state, that is, the AP is successfully woken up. After the AP is woken up successfully, the AP may perform S705.

S705: The AP sends a read/write instruction to the watchdog feeding module.

S706: The watchdog feeding module performs a read/write operation.

In S705-S706, because the watchdog feeding module has performed the read/write operation, it is determined that the AP has sent the read/write instruction to the watchdog feeding module, and it can be further determined that the AP sends the read/write instruction after being successfully woken up.

Correspondingly, because the watchdog feeding module has not performed the read/write operation, it is determined that the AP has not sent the read/write instruction to the watchdog feeding module, and it can be further determined that the AP is still in the suspend state, that is, the AP is not woken up. For this case, refer to S704b.

S704b: The AP maintains in a suspend state if the AP has not received the RTC timing interrupt.

In some embodiments, the AP maintains in the suspend state if the AP has received the RTC timing interrupt but cannot respond.

S707: The listener determines whether the watchdog feeding module performs the read/write operation.

It should be noted that, each time the RTC timer expires, the RTC timer first determines, based on whether the difference between the timing refresh moment and the watchdog feeding moment is less than the first preset threshold, a manner to wake up the AP. If the difference between the timing refresh moment and the watchdog feeding moment is less than the first preset threshold, the AP is woken up in an interrupt signal manner. If the difference between the timing refresh moment and the watchdog feeding moment is not less than the first preset threshold, the AP is woken up in another manner. If the AP is woken up in the interrupt signal manner, the listener determines, by listening to whether the timing moment of the watchdog feeding module is greater than a preset value, whether the watchdog feeding module has successfully performed the read/write operation, to determine whether the AP is woken up based on the interrupt signal. If the timing moment of the watchdog feeding module is greater than the preset value, it indicates that the watchdog feeding module has performed the read/write operation, and S708a is performed; or if the timing moment of the watchdog feeding module is less than or equal to the preset value, it indicates that the watchdog feeding module has not successfully performed the read/write operation, and S708b is performed.

S708a: The listener is not triggered if the watchdog feeding module has performed the read/write operation.

S709: The RTC timer updates the watchdog feeding moment to a current moment.

S708b: The listener is triggered if the watchdog feeding module has not performed the read/write operation.

S710: The RTC timer does not update the watchdog feeding moment.

In S708a-S710, the RTC timer sends, by updating or not updating the watchdog feeding moment, a message indicating whether a system is woken up successfully to the RTC timer at the time of next timing expiration. The RTC timer (recorded as RTC1) at the time of the next timing expiration may infer, based on a time difference, whether previous RTC wake-up (recorded as RTC0) is successful, thereby determining whether the mobile phone has entered the first suspend state currently.

For example, as shown in FIG. 11, RTC1 performs S702 to obtain a timing refresh moment T_{RTC0} and a watchdog feeding moment T_{wd0}, where T_{wd0} is a moment at which the AP indicates the watchdog feeding module to perform the read/write operation when RTC 1 wakes up the AP. RTC2 performs S702 to obtain T_{RTC1} and T_{wd1}, where T_{wd1} is a moment at which the AP indicates the watchdog feeding module to perform the read/write operation when RTC2 wakes up the AP.

In FIG. 11, RTC1 wakes up the AP successfully at the moment T_{RTC1}. Therefore, RTC1 performs S708a, thereby updating T_{wd1} from T_{wd0} to the moment T_{RTC1}. However, RTC2 has not woken up the AP at the moment RTC2. Therefore, RTC2 performs S708b, and a watchdog feeding moment corresponding to RTC2 is still T_{wd1}.

Therefore, after RTC3 performs S702 to obtain T_{RTC2} and T_{wd1}, RTC3 may determine that a difference between T_{RTC2} and T_{wd1} is greater than the first preset threshold. Therefore, RTC3 performs the foregoing operation of S703b to wake up the AP in a manner of rebooting the system.

S703b: Trigger, if a difference between the timing refresh moment and the watchdog feeding moment is greater than or equal to a first preset threshold, an operation of rebooting a system.

The first preset threshold is greater than the preset refresh period and less than twice the preset refresh period. For example, if the preset refresh period is 4 min, the first preset threshold is 4.5 min, 5 min, 5.5 min, 6 min, or the like.

In some embodiments, the first preset threshold is the preset refresh period * 3/2. Therefore, an accurate determining result can still be obtained when the preset refresh period is small. For example, when the first preset threshold is close to the preset refresh period, a determining result is incorrect once a speed of obtaining the timing refresh moment is slow, for example, the second suspend state is falsely determined as the first suspend state. Therefore, an error-tolerant rate is small, and a requirement for computational power of the mobile phone is high. In this embodiment, the first preset threshold is set to the preset refresh period * 3/2, to increase the error-tolerant rate of precision obtaining and reduce a requirement for computational power.

For example, if the preset refresh period is 0.5 min, 2 min, 4 min, 6 min, 8 min, or the like, the first preset threshold is correspondingly 0.75 min, 3 min, 6 min, 9 min, 12 min, or the like.

In a normal suspend state, the AP may be automatically woken up in response to that the RTC timing interrupt is detected. Therefore, in the normal suspend state, the AP is woken up after each preset refresh period ends. For example, if the preset refresh period is 4 min, wake-up moments of the AP are about 0 min, 4 min, 8 min, 12 min, ..., and 4n (n>3 and n is a natural number). When the mobile phone enters the second suspend state, the AP cannot be woken up based on the RTC timing interrupt. For example, moments at which the RTC sends the interrupt are 0 min, 4 min, 8 min, and 12 min, but wake-up moments of the AP are about 0 min and 4 min. It can be learned that the AP is not woken up after 4 min. In this case, when T_{RTC} is 12 min, the RTC determines that a difference between the current moment and the wake-up moment (4 min) of the AP is 8, which is greater than the first preset threshold 6 min. Therefore, the operation of rebooting the system is triggered.

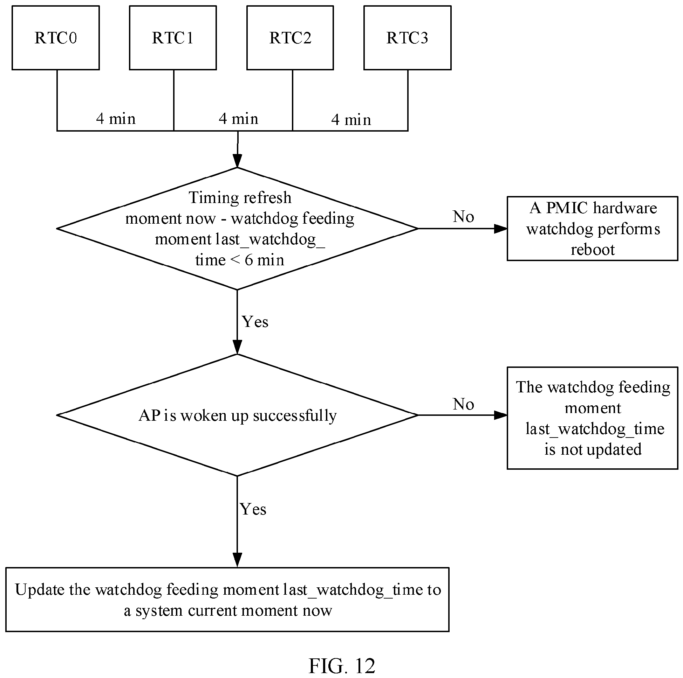

The following uses a specific example to describe the steps of the foregoing embodiment. As shown in FIG. 12, the preset refresh period is 4 min. At the timing refresh moment at which each preset refresh period ends (corresponding to RTC0, ..., and RTC3 in FIG. 12), the RTC timer determines whether a condition 1 "the timing refresh moment now - the watchdog feeding moment last_watchdog_time < the first preset threshold" is met. If the condition 1 is not met, a PMIC hardware watchdog performs reboot, that is, in response to a second control instruction sent by the listener listening to the read/write operation of the watchdog feeding module, the PMIC enables the AP to reboot after disconnection. If the condition 1 is met, the RTC timer determines whether a condition 2 "the AP is successfully woken up" is met. If the condition 2 is not met, the RTC timer does not update the watchdog feeding moment last_watchdog_time. If the condition 2 is met, the RTC timer updates the watchdog feeding moment last_watchdog_time to the timing refresh moment now (or referred to as the current moment).

In conclusion, this embodiment of this application provides a wake-up method, to periodically wake up the AP by the RTC timer, and indicate, after the AP is woken up, the watchdog feeding module to perform the read/write operation. Therefore, the RTC timer first determines, by determining whether the watchdog feeding module has performed the read/write operation last time, whether the mobile phone currently enters a deep suspend mode. Then, the RTC timer transmits, in a manner of updating the watchdog feeding moment when the AP is successfully woken up and not updating the watchdog feeding moment when the AP is not successfully woken up, the message indicating whether the system is successfully woken up to the RTC timer at the time of the next timing expiration. In this way, each time the RTC timer expires, the RTC timer first determines, based on whether the difference between the timing refresh moment and the watchdog feeding moment is less than the first preset threshold, the manner to wake up the AP. If the difference between the timing refresh moment and the watchdog feeding moment is less than the first preset threshold, the AP is woken up in the interrupt signal manner. If the difference between the timing refresh moment and the watchdog feeding moment is not less than the first preset threshold, the AP is woken up in a manner of rebooting a circuit. If the AP is woken up in the interrupt signal manner, the RTC timer further determines whether the watchdog feeding module has successfully performed the read/write operation at the current moment. If the watchdog feeding module has successfully performed the read/write operation at the current moment, the watchdog feeding moment is updated. If the watchdog feeding module has not successfully performed the read/write operation at the current moment, the watchdog feeding moment is not updated.

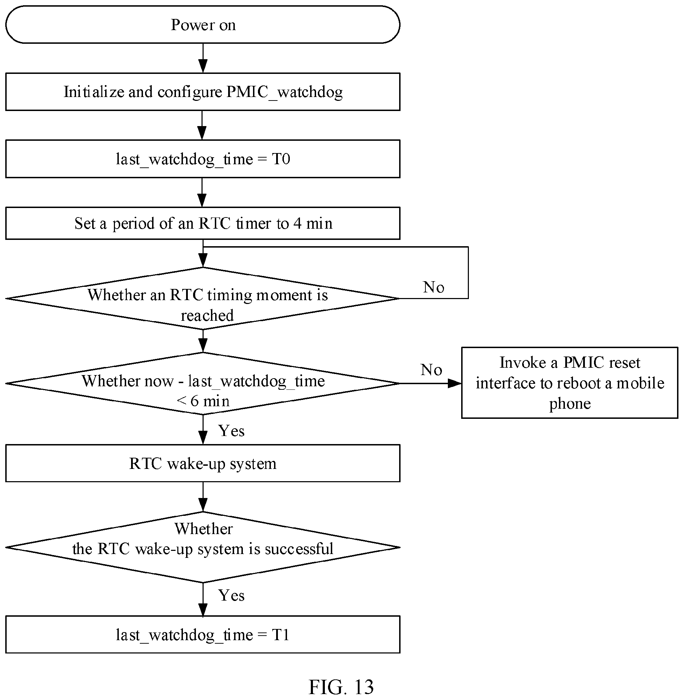

This embodiment may be implemented by configuring PMIC watchdog. Specifically, as shown in FIG. 13, this embodiment is applied to an RTC wake-up system. The RTC wake-up system is deployed at a kernel layer, and includes an RTC timer, an AP, a watchdog feeding module PMIC watchdog, and a PMIC. After the mobile phone is powered on, PMIC watchdog is initialized and configured in an input subsystem at the kernel layer, and a watchdog feeding timing variable (or referred to as the watchdog feeding moment) last_watchdog_time is recorded as a system current time T0, and an RTC timer whose timing refresh period is 4 min is disposed. The RTC timing interrupt is sent to the AP whenever the RTC timer refreshes. The RTC timer determines whether the difference between the timing refresh moment now and the watchdog feeding timing variable last_watchdog_time meets the condition 1 "the timing refresh moment now - the watchdog feeding moment last_watchdog_time < the first preset threshold, and the first preset threshold = 6 min". If the condition 1 is met, it indicates that the AP is successfully woken up based on a previous RTC timing interrupt, so that the AP indicates PMIC watchdog to perform the read/write operation. Therefore, when the RTC timer sends the RTC timing interrupt to the AP this time, last_watchdog_time is updated to a system current moment T1. If the condition 1 is not met, it indicates that the AP is not successfully woken up based on a previous RTC timing interrupt, which is equivalent to that the mobile phone has entered the second suspend state. Therefore, a PMIC reset interface is invoked to reboot the mobile phone. It should be noted that when a difference between the system current moment T1 and the timing refresh moment now is small, T1 may be approximately considered as the timing refresh moment now, that is, last_watchdog_time is updated to the timing refresh moment now. In addition, an objective of "the first preset threshold = 6 min" in the condition 1 is as follows: When the mobile phone enters the second suspend state, the RTC wake-up system at the kernel layer cannot wake up the mobile phone, and a time from refreshing of the RTC timer to a watchdog feeding moment of previous watchdog feeding success excesses 4 min. Therefore, the first preset threshold is set to a value greater than 4 min, for example, 6 min in this embodiment.

In the foregoing embodiment, a PMIC watchdog guard mechanism is used, and the RTC timer is disposed to ensure that there is a watchdog feeding action in each RTC period (for example, 4 min). When the mobile phone is screen-off and has no response when being still, the RTC timer fails to wake up the mobile phone, and therefore, there is no watchdog feeding action in the RTC period. Then, a PMIC hardware watchdog mechanism is triggered to wake up the mobile phone from a hardware level, to achieve an objective of abnormality recovery Because PMIC watchdog is introduced, to determine whether the watchdog feeding module can implement watchdog feeding, the AP is woken up in each RTC period, which increases a quantity of times of waking up the mobile phone, resulting in power consumption degradation.

For example, in the related technology, a power saving control module is built in the mobile phone, to control the mobile phone to enter the first suspend state when the mobile phone is screen-off or switches to the night mode. In the first suspend state, preset duration is set to periodically wake up the mobile phone. By using the foregoing embodiment, in addition to original periodical wake-up at an internal of first duration, there is additional periodical wake-up of the RTC timer. Due to a hardware specification of the RTC timer, a period of the RTC timer cannot be consistent with a unified heartbeat. Consequently, a plurality of times of standby wake-up are additionally added, resulting in function degradation.

The following further describes a power consumption degradation part.

First, the power saving control module is a function carried on the mobile phone. The mobile phone is used by the user most of the daytime. Therefore, the power saving control module has a low level of control, but the power saving control module has a high level of control at night. In some embodiments, the power saving control module sends at an interval of 5 minutes. However, currently, the RTC timer cannot work at a frequency of 5 minutes. Therefore, the RTC timer performs wake-up at a frequency different from that of the power saving control module, resulting in additional wake-up. Especially in a night standby scenario, by default, the mobile phone does not receive the triggering operation at night, and therefore, the power saving control module and the RTC timing module are maintained in an enabled state at night. Standby for 6 h at night is used as an example. The RTC timer performs wake-up once every 4 minutes, a quantity of times of wake-up in 1 h is 60/4=15 (times), and a quantity of times of wake-up in 6 h is 15*6=90 (times). Because the mobile phone is not woken up at a time point at which the night standby scenario starts and a time point at which the night standby scenario ends, a quantity of endpoints at the beginning and the end is subtracted to obtain 90-2=88 (times), that is, 6 h of standby at night additionally causes 88 times of wake-up. An average current degradation value of 88 times of wake-up is about 3.5 mA, which is 21 mAh after being converted into a battery capacity. In this way, a standby time of the mobile phone is short after PMIC watchdog is configured, resulting in fast power consumption, and poor user experience.

Second, it is found through studies that an actually measured battery level of the mobile phone in the second suspend state (that is, the mobile phone is screen-off and has no response when being still) is extremely low, thus causing power consumption degradation by using the PMIC watchdog guard mechanism. Consequently, a probability that the mobile phone enters the second suspend state may be increased due to accelerated power consumption, and the mobile phone may be powered off due to a low power when power consumption is accelerated. In this way, a problem that the mobile phone enters the second suspend state cannot be effectively resolved, and a vicious cycle "the low power - the second suspend state - the low power" is further formed.

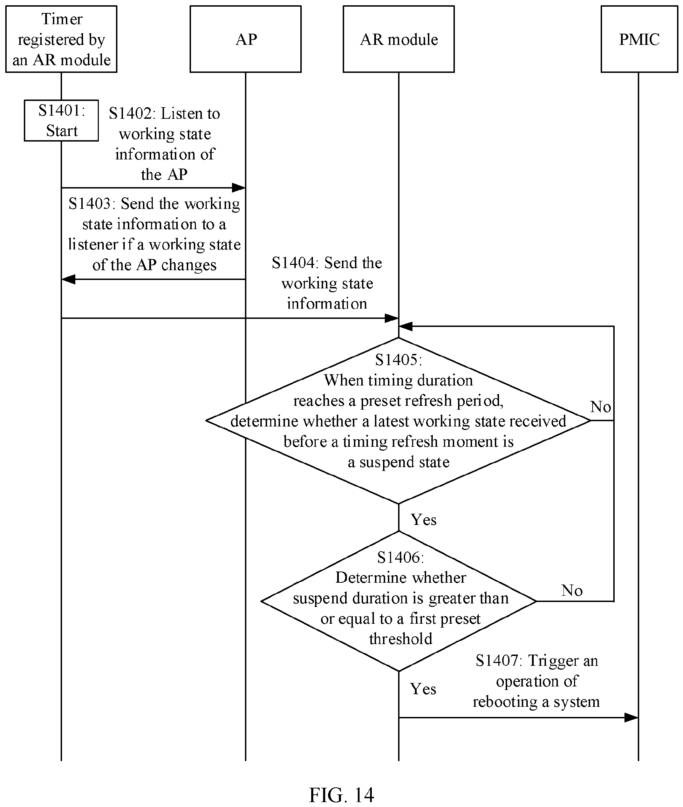

To resolve the foregoing problems, an embodiment of this application provides another wake-up method. The method is applied to an electronic device. The electronic device includes a sensor hub sensorhub. An AR module in the sensor hub sensorhub registers a listener with an AP, to listen to working state information of the AP. For example, the electronic device is a mobile phone. As shown in FIG. 14, the method includes the following steps.

S1401: A timer registered with the AR module starts timing.

The activity recognition (activity recognition, AR) module is a software module on a sensorhub side. In a related technology, the AR module receives a behavior feature collected by a sensor such as a pedometer or an acceleration sensor in the mobile phone, and detects, by identifying the behavior feature, whether the mobile phone is in an activity scenario such as in a vehicle, cycling, walking, running, stationary, or lying down. The timer is registered with the AR module for timing, and a preset refresh period of the timer is set. When timing duration of the timer reaches the preset refresh period, whether the mobile phone enters a second suspend state is detected. Because only an action of detecting whether the mobile phone enters the second suspend state is performed when the timer expires, and the AP is not actively woken up, not additional AP wake-up event is generated when the timing duration reaches the preset refresh period.

In addition, the timer registered with the AR module may start timing when the mobile phone is powered on. Because the AR module detects the behavior feature of the mobile phone for 24 h, power consumption degradation is not caused by starting the timer when the mobile phone is powered on.

S1402: The listener registered by the AR module listens to working state information of the AP.

After the mobile phone is powered on, the AR module sends a registration request to a remote processor state listener to listen to a suspend/wake-up event sent by the AP. Because the AR module may also receive the behavior feature when the mobile phone is in a suspend state, the listener is registered in the AR module to receive the suspend/wake-up event from an AP side around the clock without waking up the AP. Therefore, power consumption degradation problems mentioned in the foregoing embodiment can be resolved.

The working state information includes awake state information and suspend state information. After a unified heartbeat is set to periodically wake up the mobile phone, the AP is woken up at an interval of a suspend period, and enters the suspend state at an interval of a wake-up period. Therefore, the AP may send the awake state information to the listener after the AP is woken up, to indicate that the AP enters an awake state. The AP sends the suspend state information to the listener when the AP enters the suspend state, to indicate that the AP enters the suspend state.

For example, the unified heartbeat is 5 min. The AP has received a first control instruction (or referred to as a wake-up instruction) at a moment T₀=1 min. Then, the AP switches from the suspend state to the awake state, and sends the awake state information to the listener after being woken up. Because a time difference between the moment at which the AP has received the first control instruction and a moment at which the listener has detected the awake state information sent by the AP is extremely short, the moment T₀ at which the AP has received the first control instruction may be used as a wake-up moment t₀ of the AP. Therefore, it can be determined that the listener has detected the working state information of the AP at the moment t₀=1 min. After one unified heartbeat, that is, at a moment T₁=6 min, the AP determines, based on an application process having released a wake-up lock, that the application process can enter the suspend state. Then, the AP first sends the suspend state information to the listener, and then switches from the awake state to the suspend state. Similarly, a time difference between a moment at which the AP has received an indication indicating that the AP can enter the suspend state and a moment at which the AP enters the suspend state is extremely short. Therefore, the moment T₁ at which the indication indicating that the AP can enter the suspend state (that is, a moment at which a last wake-up lock of the application process is released) is received may be used as a suspend moment t₁ of the AP. Therefore, it can be determined that the listener has detected the working state information of the AP at the moment t₁=6 min.

Certainly, the foregoing setting of the unified heartbeat as 5 min is merely an example, and the unified heartbeat may alternatively be set to 6 min, 7 min, 10 min, 15 min, 16 min, or the like. This is not limited in this application.

S 1403: The AP sends the working state information to the listener if a working state of the AP changes.

In this embodiment, the AP sends the working state information only when the working state changes. Specifically, the working state of the AP remains unchanged in a timing period of the unified heartbeat, for example, is the awake state. The AP does not send the working state information once at an internal of several seconds, but sends the working state information when determining to switch to the suspend state. When the AP is in a low-power suspend mode, the AP alternately sends the suspend state and the awake state to the listener. For example, sent working state information 1 is "the suspend state - the awake state - the suspend state - the awake state - the suspend state". After the AP enters the second suspend state, the AP cannot be woken up after sending the suspend state on one occasion, and therefore cannot send the suspend state. For example, sent working state information 2 is "the suspend state - the awake state - the suspend state", and subsequent "the awake state - the suspend state" is missing. An advantage of sending the suspend state and the awake state alternately is that it can be determined, if the listener has detected the working state information sent by the AP, that the working state of the AP changes, or it can be determined, if the listener has not detected the working state information sent by the AP, that the AP maintains in the working state sent last time. This is more intuitive in data analysis.

Each time the AP sends the suspend state or the awake state to the listener, the listener has detected an event, and the listener performs S 1404, to send the working state information to the AR module.

S1404: The listener sends the working state information to the AR module.

It should be noted that lower-layer modules of some operating platforms cannot directly obtain data from upper-layer modules, and similarly, the upper-layer modules cannot directly invoke the lower-layer modules. In this embodiment, the listener is used to transmit data of an AP module at an upper layer to the AR module at a lower layer, so that the listener can play a role of transmitting the data from the upper layer to the lower layer. This manner may be adapted to more operating platforms and has better versatility.

In some embodiments, the listener further sends switching time information when sending the working state information to the AR module, where the switching time information refers to a current moment at which the AP switches from the suspend state to the awake state, or switches from the awake state to the suspend state.

In some other embodiments, the AR module may record the switching time information when the AR has received the working state information sent by the listener. Because sending the working state information consumes a short time, a current moment recorded by the AR module or a current moment recorded by the listener may be approximately considered as the current moment at which the AP switches the working state.

S1405: When timing duration reaches a preset refresh period, the AR module determines whether a latest working state received before a timing refresh moment is a suspend state.

In this step, if the latest working state is the suspend state, it indicates that the mobile phone is in the suspend state before the timer expires (which is equivalent to that the timing duration reaches the preset refresh period). If the latest working state is not the suspend state, it indicates that the mobile phone is in the awake state and has not yet entered the suspend state before the timer expires. If the mobile phone is in the suspend state, whether the mobile phone has entered the second suspend state needs to be further determined. Therefore, the mobile phone performs S 1406. If the mobile phone is in the awake state, it indicates that the mobile phone can be normally used. Therefore, there is no need to perform the following steps, just wait for next refresh of the RTC timer.

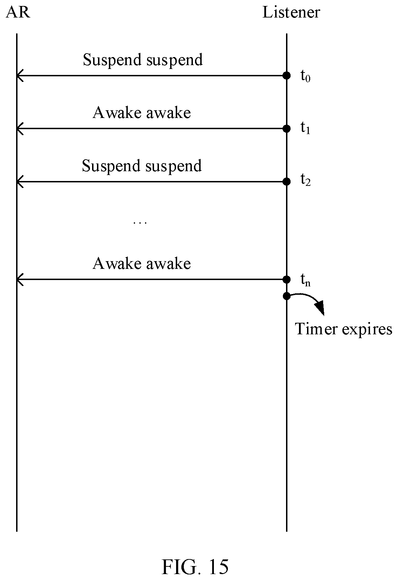

For example, as shown in FIG. 15, the listener sends working state information 1 "suspend suspend, t₀" to the AP at the moment t₀, the listener sends working state information 2 "awake awake, ti" to the AP at the moment t₁, the listener sends working state information 3 "suspend suspend, t₃" to the AP at a moment t₂, ..., and the listener sends working state information n "awake awake, tₙ" to the AP at a moment tₙ. Then, the timer expires, and the AR module determines that the working state information n is the latest working state information received before the timing refresh moment, and determines, based on the working state information n, that the mobile phone is in the awake state, that is, the mobile phone can be normally used. In this case, S1406 is not performed. It should be noted that, in this embodiment, S1405 may be set to process only a case in which a working state received most recently is the suspend state, thereby reducing unnecessary computing costs. Certainly, in some design manners, a determining step of S1405 may be omitted.

S1406: If the latest working state received before the timing refresh moment is the suspend state, the AR module determines whether suspend duration is greater than or equal to a first preset threshold.

As mentioned in S 1404, the AR module has further received a recorded switching time when the AR module has received the working state information, to record the current moment at which the mobile phone enters the awake state or the suspend state. When the working state information indicates that the mobile phone switches to the awake state, the recorded switching time may be referred to as a wake-up moment. When the working state information indicates that the mobile phone switches to the suspend state, the recorded switching time may be referred to as a suspend moment. The suspend duration may be obtained by calculating a difference between the suspend moment at which the mobile phone enters the suspend state and the timing refresh moment.

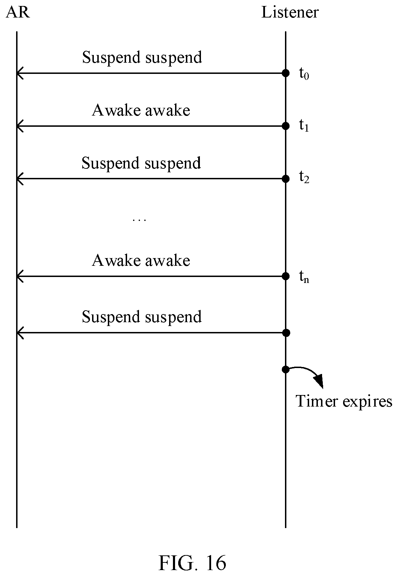

As shown in FIG. 16, the listener sends working state information n+1 "suspend suspend, tₙ₊₁" to the AP at a moment tₙ₊₁. Then, the timer expires, and the AR module determines that the working state information n+1 is the latest working state information received before the timing refresh moment, and determines, based on the working state information n+1, that the mobile phone is in the suspend state. In this case, the AR module performs S1406, to further determine whether the mobile phone has entered the second suspend state. The suspend moment corresponds to the moment tₙ₊₁ in FIG. 16, and the suspend duration refers to a difference between a current moment T at which the timer expires and the suspend moment tₙ₊₁.

The first preset threshold may be set according to an actual requirement. Usually, the first preset threshold is greater than the period of the unified heartbeat. For example, if the period of the unified heartbeat is 5 min, the first preset threshold is a value greater than 5 min. For example, the first preset threshold may be 6 min, 8 min, 10 min, 15 min, 16 min, 21 min, or 22 min. For another example, if the period of the unified heartbeat is 15 min, the first preset threshold may be 16 min, 21 min, 22 min, or the like.

In this step, a condition for determining whether the mobile phone enters the second suspend state is that the AR module determines whether the suspend duration is greater than or equal to the first preset threshold. Therefore, when the suspend duration is greater than or equal to the first preset threshold, it indicates that the mobile phone, or referred to as the AP of the mobile phone, has entered the second suspend state, and the mobile phone performs S 1407 to reboot the device. When the suspend duration is less than the first preset threshold, it indicates that the mobile phone has not yet entered the second suspend state. Then, the mobile phone does not trigger an operation of rebooting a system, that is, the listener registered by the AR module still continuously listens to the working state of the AP, and performs S 1403 when the working state of the AP changes.

A case in which the AP has entered the second suspend state is described with examples in S 1407 below.

S 1407: The AR module triggers, if the suspend duration is greater than or equal to the first preset threshold, an operation of rebooting a system.

The listener may be disposed in the AR module. When the suspend duration is greater than or equal to the first preset threshold, the listener triggers the operation of rebooting the system, and the system reboots.

Specifically, that the listener in the AR module triggers the operation of rebooting the system includes: After detecting that the suspend duration is greater than or equal to the first preset threshold, the listener in the AR module writes a second control instruction into a PMIC. The PMIC has received the second control instruction, so that the AP reboots after disconnection.

Certainly, the listener may alternatively not be disposed in the AR module, and the listener may be disposed in any module of a sensorhub layer to listen to the suspend duration. If it is detected that the suspend duration is greater than or equal to the first preset threshold, the listener disposed in any module of the sensorhub layer may write the second control instruction into the PMIC, to achieve an objective of rebooting the system.

In the foregoing S1401-S1407, the operation of rebooting the system is triggered when the suspend duration is greater than or equal to the first preset threshold. Based on this, an embodiment of this application provides a solution, to reduce a probability of falsely triggering the entire device to reboot due to an error of unified heartbeat wake-up.

Specifically, the AP is not necessarily woken up based on the unified heartbeat when the mobile phone is in a normal first suspend state. When the mobile phone is not woken up at a moment at which the mobile phone should be woken up due to an error occurs on the unified heartbeat, using the foregoing solution may directly trigger the operation of rebooting the system, but this operation is actually a false triggering operation that falsely triggers the entire device to reboot. User experience is affected because a process of the mobile phone is disabled when the mobile phone reboots. Therefore, the probability of falsely triggering the entire device to reboot should be reduced as much as possible.

Based on this, in this embodiment, a second preset threshold (or referred to as an active wake-up threshold) that is greater than the unified heartbeat and less than the first preset threshold is preset in the mobile phone, so that the AR module attempts to actively wake up the AP when the suspend duration is greater than or equal to this value. If the AR module can wake up the AP, it indicates that the AP is not woken up based on the unified heartbeat, and the AR module does not need to reboot the system to restore the mobile phone to normal. If the AR module cannot wake up the AP, it indicates that the mobile phone has entered the second suspend state, and the operation of rebooting the system is triggered.

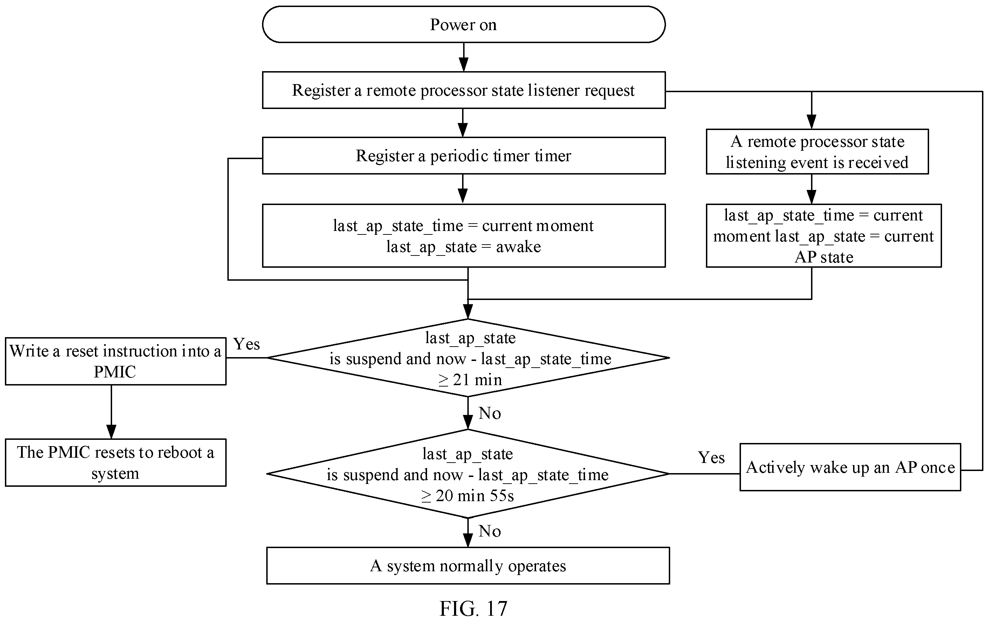

The following describes, with a specific example, a wake-up procedure of the AR module after the second preset threshold is set. As shown in FIG. 17, after the system is powered on (or the system reboots), the AR module registers a remote processor state listener (corresponding to the foregoing listener) request, and registers a periodic timer (corresponding to the foregoing timer), where a period time is set to 500 ms.

Then, the AR module initializes last_ap_state_time (corresponding to the foregoing switching time information) of the remote processor state listener, where last_ap_state_time is used to record a current moment at which the AR has received a latest switch of the AP from the suspend state to the awake state or from the awake state to the suspend state. The AR module further initializes last_ap_state of the remote processor state listener (corresponding to the foregoing working state information). In this example, last_ap_state_time is initialized as the current moment, and last_ap_state is initialized as the awake state.

Then, whenever the listener has received a remote processor state listening event asynchronously, the listener updates last_ap_state_time to a current moment at which the remote processor state listening event is received, and updates last_ap_state to a current suspend/awake state of the AP.

Then, the timer detects, at an interval of 500 ms, whether a condition a for the AP to enter the second suspend state is met, where the condition a is "last_ap_state is the suspend state, and now - last_ap_state_time ≥ 21 min". If the condition a is met, the listener in the AR module triggers an action of writing the second control instruction into the PMIC, and the PMIC resets to reboot the system. If the condition a is not met, that is, a difference between the current moment now and the suspend moment last_ap_state_time is less than 21 min, whether a false triggering-proof detection condition b used when the AP has not been woken up based on the unified heartbeat is met is further determined, where the condition b is "last_ap_state is the suspend state, and now - last_ap_state_time ≥ 20 min 55s". If the condition b is met, the AR module sends an interrupt to the AP to actively wake up the AP. Because a difference between 21 min and 20 min 55s is 5s, the AR module has 10 opportunities to wake up the AP before the condition b is met but the condition a is not met. If 10 times of wake-up all fail, now - last_ap_state_time ≥ 21. Then, the listener in the AR module triggers the action of writing the second control instruction into the PMIC, and the PMIC resets to reboot the system. If the AP is woken up within 5s, there is no need to reboot the system, and the remote processor state listener has detected the awake state, and sends the awake state and the current moment to the AR module as the remote processor state listening event. After the AR module has received the remote processor state listening event, the AR module performs "updating of last_ap_state_time to the current moment at which the remote processor state listening event is received, and updating of last_ap_state to the current suspend/awake state of the AP". In this way, it can be ensured that when the mobile phone enters the second suspend state, the entire PMIC is triggered to reboot to restore the mobile phone to normal. In addition, a false triggering-proof function is also added, thereby reducing the probability of falsely triggering the entire device to reboot due to the error of the unified heartbeat.

Based on the foregoing embodiments, an embodiment of this application provides a data maintenance and test solution. When the mobile phone enters the second suspend state, a maintenance and test event may be reported to a data platform. In the data platform, an exception situation of the mobile phone may be learned based on the maintenance and test event, to take a timely response and processing measure, thereby reducing a negative impact caused when the mobile phone enters the second suspend state.

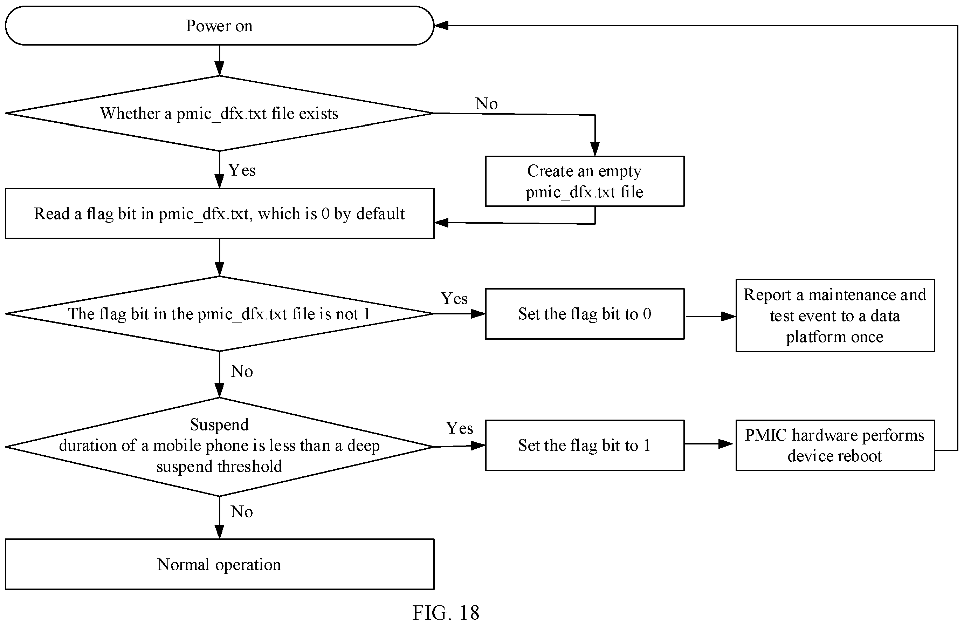

Specifically, as shown in FIG. 18, when the mobile phone is powered on, whether a pmic_dfx.txt file exists is determined, where pmic_dfx.txt is a file recording the maintenance and test event of the mobile phone. If pmic_dfx.txt does not exist, an empty pmic_dfx.txt file is created. If pmic_dfx.txt exists, a flag bit in pmic_dfx.txt is read. If the flag bit in the pmic_dfx.txt file is 0, it indicates that no maintenance and test event occurs. If the flag bit in the pmic_dfx.txt file is 1, it indicates that the maintenance and test event occurs. The flag bit in the pmic_dfx.txt file, in one branch of determining whether the flag bit in the pmic_dfx.txt file is 1, is not 1. Then, whether the suspend duration of the mobile phone is greater than or equal to the first preset threshold is determined. If the suspend duration of the mobile phone is greater than or equal to the first preset threshold, the flag bit is updated to 1, and the system reboots. Then, the mobile phone is powered on, and the above-mentioned steps after power-on are performed. If the suspend duration of the mobile phone is less than the first preset threshold, the mobile phone normally operates.

In FIG. 18, in the other branch of determining whether the flag bit in the pmic_dfx.txt file is 1, the flag bit is 1. In this case, the flag bit is first set to 0, to avoid falling into a cycle "a read flag bit is 1 - reboot - a read flag bit is 1" after the mobile phone reboots. Then, the maintenance and test event is reported to the data platform, and the data platform performs unified management and analysis on the data.

In conclusion, this embodiment of this application provides a wake-up method. In a case in which the mobile phone is currently periodically woken up based on the unified heartbeat, the remote processor state listener is registered in the AR module at the sensorhub layer to listen to a wake-up event and a suspend event in which the AP is woken up and enters the suspend state based on the unified heartbeat. After the mobile phone is powered on, the AR module can continuously receive the wake-up event and the suspend event without waking up the AP. Because the AP is not additionally woken up, power consumption is reduced. In addition to reducing power consumption, whether the mobile phone has entered a deep suspend event is determined based on whether the suspend duration of the mobile phone is greater than or equal to the first preset threshold. If the suspend duration of the mobile phone is less than the first preset threshold, whether the suspend duration is greater than or equal to the second preset threshold is further determined. If the suspend duration is greater than or equal to the second preset threshold, a false wake-up-proof mechanism of the AR module is triggered, that is, the AR module wakes up, in a period in which the suspend duration is greater than or equal to the second preset threshold and is less than the first preset threshold, the AP once at an interval of the timing refresh period. If the AR module cannot wake up the AP, it indicates that the mobile phone has entered the second suspend state, and the operation of rebooting the system is triggered. In this way, accuracy of detecting that the mobile phone enters the second suspend state can be improved, and the mobile phone automatically reboots after it is determined that the mobile phone enters the second suspend state, to restore the mobile phone to normal.

Some other embodiments of this application provide an electronic device. The electronic device may include a display (for example, a touchscreen), a memory, and one or more processors. The display, the memory, and the processor are coupled to each other. The memory is configured to store computer program code, and the computer program code includes computer instructions. When the processor executes the computer instructions, the electronic device may perform the functions or steps performed by the mobile phone in the foregoing method embodiments. For a structure of the electronic device, refer to the structure of the electronic device shown in FIG. 4.

An embodiment of this application further provides a computer-readable storage medium. The computer-readable storage medium includes computer instructions. When the computer instructions are run on the foregoing electronic device, the electronic device is enabled to perform the functions or steps performed by the mobile phone in the foregoing method embodiments.

An embodiment of this application further provides a computer program product. When the computer program product runs on a computer, the computer is enabled to perform the functions or steps performed by the mobile phone in the foregoing method embodiments.

It may be clearly learned by a person skilled in the art from the foregoing descriptions of the implementations that for convenience and brevity of description, only division into the foregoing functional modules is used as an example for description. In actual application, the foregoing functions may be allocated to different functional modules as required for implementation, in other words, an internal structure of an apparatus is divided into different functional modules, to complete all or some of the functions described above.

In the several embodiments provided in this application, it should be understood that the disclosed apparatus and method may be implemented in another manner. For example, the foregoing apparatus embodiment is merely an example. For example, division of the modules or the units is merely logical function division and may be another division manner in an actual implementation. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, the functional units in the embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of the embodiments of this application essentially, the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in the embodiments of this application. The foregoing storage medium includes various media that can store program code, for example, a USB flash drive, a removable hard disk, a read only memory (read only memory, ROM), a random access memory (random access memory, RAM), a magnetic disk, or an optical disc.

The foregoing content is only specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A wake-up method, applied to an electronic device, wherein the method comprises:
starting, by the electronic device, timing;
obtaining suspend duration if a working state of the electronic device is a suspend state when timing duration reaches a preset refresh period, wherein the suspend duration is a difference between a moment at which the electronic device enters the suspend state and a timing refresh moment, and the timing refresh moment is a moment at which the timing duration reaches the preset refresh period; and
triggering, by the electronic device if the suspend duration is greater than or equal to a first preset threshold, an operation of rebooting a system.

2. The method according to claim 1, wherein the method further comprises:
triggering, if the suspend duration is less than the first preset threshold and greater than a second preset threshold, an operation of waking up the electronic device.

3. The method according to claim 2, wherein a difference between the first preset threshold and the second preset threshold is greater than the preset refresh period.

4. The method according to any one of claims 1-3, wherein the electronic device comprises an application processor AP and a low-power module in a sensor hub sensorhub; and
the obtaining suspend duration if a working state of the electronic device is a suspend state when timing duration reaches a preset refresh period comprises:
receiving, by the low-power module, working state information sent by the application processor AP; and
when the timing duration reaches the preset refresh period, if the low-power module determines, based on the received working state information, that a working state of the application processor AP is the suspend state, obtaining the suspend duration.

5. The method according to claim 4, wherein the receiving, by the low-power module, working state information sent by the application processor AP comprises:
sending, by the application processor AP, suspend state information to a listener before the application processor AP switches from an awake state to the suspend state, wherein the suspend state information indicates that the application processor AP enters the suspend state; and
receiving, by the low-power module, awake state information sent by the listener.

6. The method according to claim 4 or 5, wherein the low-power module comprises an activity recognition AR module.

7. The method according to any one of claims 1-6, wherein the electronic device comprises a power management integrated circuit PMIC; and
the triggering, by the electronic device if the suspend duration is greater than or equal to a first preset threshold, an operation of rebooting a system comprises:
sending a second control instruction to the power management integrated circuit PMIC if the suspend duration is greater than or equal to the first preset threshold; and
resetting the power management integrated circuit PMIC in response to the second control instruction, to reboot the system of the electronic device.

8. A wake-up method, applied to an electronic device, wherein the method comprises:
starting, by the electronic device, timing under a first condition;
if the electronic device is woken up when (k-1)-th timing duration reaches a preset refresh period, triggering, when k-th timing duration reaches the preset refresh period, an operation of waking up the electronic device; and
if the electronic device is not woken up, triggering, when (k+1)-th timing duration reaches the preset refresh period, an operation of rebooting a system, wherein k>1 and k is a natural number.

9. The method according to claim 8, wherein the method further comprises: if the electronic device is in a suspend state when the (k-1)-th timing duration reaches the preset refresh period, triggering the operation of rebooting the system.

10. The method according to claim 8 or 9, wherein the electronic device comprises a real-time clock RTC timer, an application processor AP, and a watchdog feeding module; and
that the electronic device is woken up when (k-1)-th timing duration reaches a preset refresh period comprises:
when the (k-1)-th timing duration of the real-time clock RTC timer reaches the preset refresh period, waking up, by the real-time clock RTC timer, the application processor AP, so that the application processor AP sends a read/write instruction to the watchdog feeding module; and
performing, by the watchdog feeding module, a read/write operation.

11. The method according to claim 10, wherein that the electronic device is not woken up comprises:
a difference between a moment at which the watchdog feeding module performs the read/write operation and a timing refresh moment is greater than or equal to a first preset threshold, and the timing refresh moment is a moment at which the timing duration reaches the preset refresh period.

12. The method according to any one of claims 8-11, wherein the first condition comprises: the electronic device is in a low-power suspend state.

13. An electronic device, comprising a processor and a memory configured to store instructions executable by the processor, wherein when the processor is configured to execute the instructions, the electronic device is enabled to implement the method according to any one of claims 1-7 or the method according to any one of claims 8 to 12.

14. A computer-readable storage medium, comprising computer instructions, wherein when the computer instructions are run on an electronic device, the electronic device is enabled to perform the method according to any one of claims 1-7 or the method according to any one of claims 8-12.
